# EUROPEAN PATENT SPECIFICATION

(11) **EP 3 369 987 B1**
(45) Date of publication and mention of the grant of the patent: **24.03.2021**
(21) Application number: 18158500.1
(22) Date of filing: 26.02.2018
(51) Int. Cl.: F21S 41/19, F21S 41/147, F21S 41/43, F21S 41/663, F21S 45/47, F21S 41/365, F21S 41/148, B60Q 1/00

(54) **VEHICLE HEADLAMP**
FAHRZEUGSCHEINWERFER
PHARE DE VÉHICULE

(30) Priority: 01.03.2017 SI 201700071
(43) Date of publication of application: 05.09.2018
(73) Proprietor: Hella Saturnus Slovenija, Proizvodnja svetlobne opreme za motorna in druga vozila, d.o.o., 1000 Ljubljana (SI); Hella KGaA Hueck & Co, 59552 Lippstadt (DE)
(72) Inventor: SUHODOLCAN, Matic, 8210 Trebnje (SI); SEIPEL, Martin, 33181 Bad Wünnenberg-Haaren (DE)
(74) Representative: Ivancic, Bojan

(56) References cited:
- EP-A1- 2 444 284
- EP-A2- 2 418 121
- EP-A2- 2 546 569
- WO-A1-2008/084882
- CN-A- 103 836 484
- DE-A1-102012 220 455
- JP-A- 2007 324 001
- JP-A- 2016 039 154
- US-A1- 2008 112 180
- US-A1- 2013 242 585
- US-A1- 2014 362 572

## Description

The present invention refers to a vehicle headlamp comprising at least one light source and at least one reflector reflecting the light of the said at least one light source, said headlamp being provided at least as an reflector of the dipped beam and a daytime lamp.

The headlamp of the aforementioned kind is known for example from the patent application No. EP 2 444 284 A1. Disclosed is a lighting and signalling device for a motor vehicle, comprising a first optical system for generating a first cut-off light beam, in particular a dipped beam or a fog lamp, and a second optical system generating a second light beam. The first optical system is capable of generating a third light beam, and the union of third and second light beams constitutes a resulting beam of the daytime signalling type. Said lighting and signalling device comprises a primary reflector and a secondary reflector, wherein said primary reflector comprises, arranged in an immediate vicinity, a first optical surface with a first light source, a second optical surface with a second light source, and a shade, whereas the secondary reflector comprises an optical surface, wherein said first light source directly cooperates with said first optical surface of the primary reflector and where the second light source directly cooperates with said second optical surface of the primary reflector, and wherein both light sources indirectly cooperate with the optical surface of the secondary reflector. Said lighting and signalling device comprise means for modifying the operating conditions of the first optical system comprising means for modifying the position of at least one element of the first optical system. Due to the moving parts, said known solution is rather complex and costs intensive.

It is the object of the present invention to create a vehicle headlamp which remedies drawbacks of the known solution.

According to the present invention, the object as set above is solved by distinguishing features set forth in claim 1. Detail of the invention is disclosed in respective subclaims.

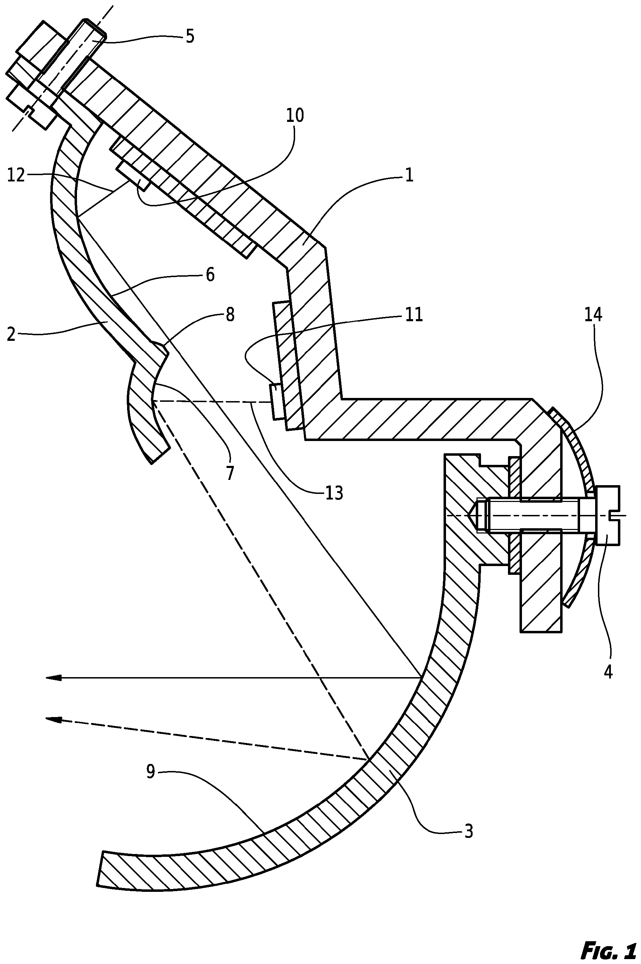

The invention is further described in detail by way of non-limiting embodiment, and with a reference to the accompanying drawings, where
Fig. 1 shows a schematic view of a vehicle headlamp according to the invention,

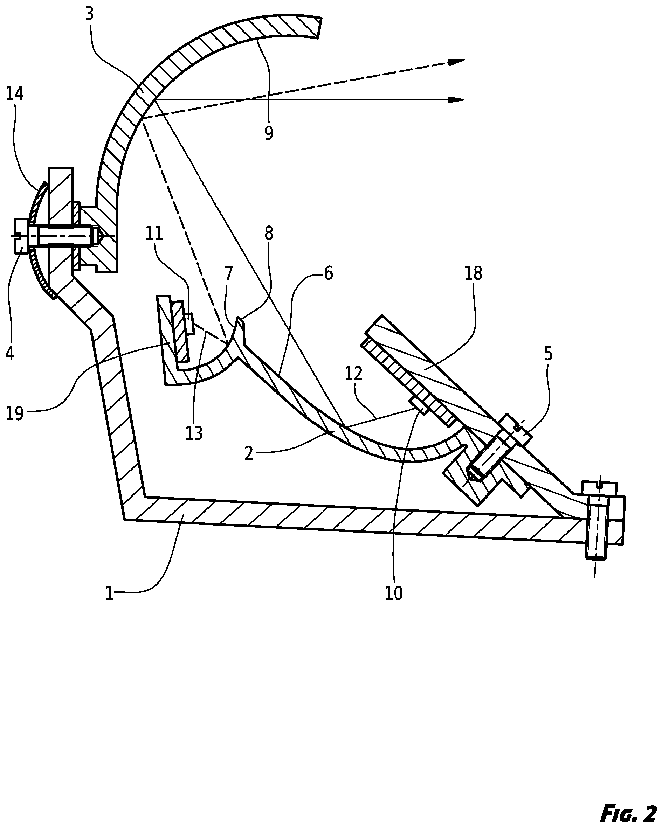

Fig. 2 shows an example of a headlamp, which does not form a part of the invention,
Fig. 3 shows a schematic presentation of the dipped beam,
Fig. 4 shows a schematic presentation of the light beam above the dipped beam,
Fig. 5 shows a schematic presentation of the daylight lamp light beam.

A vehicle headlamp according to the invention comprises at least one support member 1 carrying a primary reflector 2 and a secondary reflector 3. The primary reflector 2 faces the opposite direction to the secondary reflector 3 which faces in the approximate direction of the straight movement of the vehicle provided with the headlamp according to the invention. In addition, it is provided that the secondary reflector 3 is arranged in the area under the primary reflector 2. Said reflectors 2, 3 are held in position on the support member 1 by means of fastening means 4, 5. It is provided for according to the preferred embodiment that said support member 1 simultaneously functions as a heat sink. Furthermore, it is provided for that the fastening means 4, 5 are selected as a screw.

Said primary reflector 2 comprises, arranged close to each other and mutually connected, a first optical surface 6 and a second optical surface 7 separated by a shade 8, whereas the secondary reflector 3 comprises an optical surface 9. Said shade 8 represents a connecting portion of the optical surfaces 6, 7 of the primary reflector 2, wherein the shade 8 is formed as a convexity on the first optical surface 6 of the primary reflector 2, and is arranged in the immediate vicinity of the focus point of the optical surface 9 of the secondary reflector 3. Further, a first light source 10 is arranged on said support member 1 cooperating with said first optical surface 6, and a second light source 11 cooperating with said second optical surface 7. Each light source 10, 11 is selected for example as a light-emitting diode (LED), laser, light fibre, filament lamp, etc., or any combination thereof. Furthermore, it is provided for that the first light source 10 is located in the focus point of the first optical surface 6 of the primary reflector 2, and that the second light source 11 is located in the focus point of the second optical surface 7 of the primary reflector 2.

Mutual relative position of said primary reflector 2 and said secondary reflector 3 can be set by means of said fastening means 4, 5. Optionally, an elastic means 14 is provided between at least one reflector 2, 3 and at least one fastening means 4, 5, to prevent the loosening of the fastening means 4, 5 and/or to hold it permanently in a blocked position.

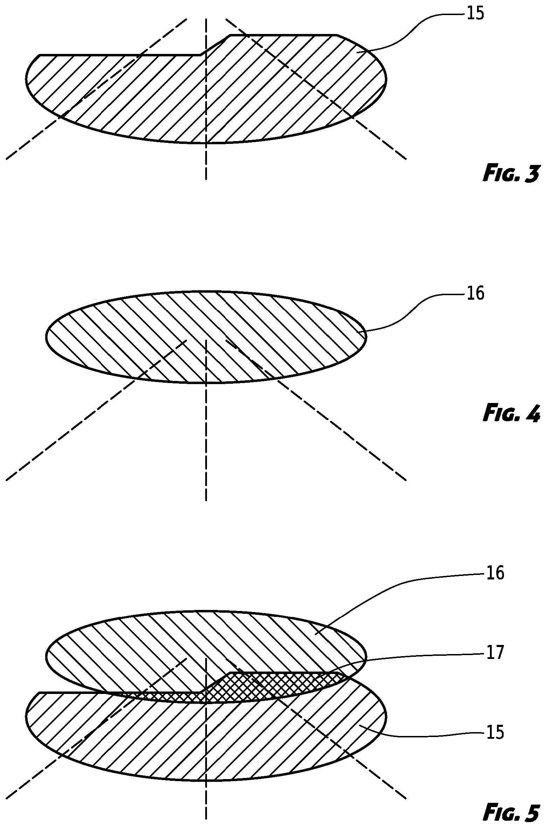

The first optical surface 6 of the primary reflector 2 is intended to generate light distribution in the sense of a dipped beam 15, as shown schematically in Fig. 3, where the dashed lines represent the vehicle's driving surface. In this case, a first light ray 12 (shown as a full line) from the first light source 10 falls directly onto the first optical surface 6 of the primary reflector 2, from where it reflects onto the optical surface 9 of the secondary reflector 3, and from the latter onto the driving surface in front of the vehicle. A so-called light-dark border of the dipped beam 15 is created by means of said shade 8.

The second optical surface 7 of the primary reflector 2 is intended to generate light distribution above the said light-dark border of the dipped beam 15, as shown schematically in Fig. 4, where the dashed lines represents the vehicle's driving surface. In this case, the second light ray 13 (shown as the dashed line) from the second light source 11 falls directly onto the first optical surface 7 of the primary reflector 2, from where it reflects onto the optical surface 9 of the secondary reflector 3, and from the latter onto the driving surface in front of the vehicle. Thus, a homogeneous light is created above the light-dark border, which represents a light beam 16 above the dipped beam 15, wherein the light source 10 is active and emits the light beam 12.

As described above, in order to create the dipped beam 15, the first light source 10 is used, and in order to create the light beam 16 above the dipped beam 15, the second light source 11 is used. If a light beam 17 of the daylight lamp is to be created, as shown schematically in Fig 5, where the dashed lines show the vehicles' driving surface, both light sources 10, 11 are used simultaneously.

In addition, the vehicle headlamp can be used also as a position light. In this case, both light sources 10, 11 are used simultaneously, wherein both light sources 10, 11 being shaded accordingly, for example by means of reducing the luminosity of the lighting current of the light sources 10, 11.

A second example, which does not form a part of the invention, differs from the above described embodiment in the primary reflector 2 being arranged under the secondary reflector 3. For this purpose, an additional bearing element 18 has been introduced to the support member 1, to carry the primary reflector 2 while the secondary reflector 3 is fixed on said support member 1. Furthermore, said first light source 10 is located on the additional bearing element 18 and in the focus point of the first optical surface 6 of the primary reflector 2, whereas the second light source 11 is located on said support member 1. Optionally the second light source 11 can be located on an extension 19, formed at the free end of the second optical surface 7 of the primary reflector 2.

## Claims

1. A vehicle headlamp comprising at least one light source and at least one reflector reflecting the light of the said at least one light source, said headlamp being provided at least as a reflector of a dipped beam and a daytime lamp, wherein a primary reflector (2) and a secondary reflector (3) are arranged on at least one support member (1), wherein said primary reflector (2) comprises, arranged in an immediate vicinity and interconnected, a first optical surface (6) and a second optical surface (7), separated by a shade (8), whereas the secondary reflector (3) comprises an optical surface (9), and arranged on said support member (1) are a first and a second light source (10, 11), wherein said first light source (10) directly cooperates with said first optical surface (6) of the primary reflector (2) and where the second light source (11) directly cooperates with said second optical surface (7) of the primary reflector (2), and wherein both light sources (10, 11) indirectly cooperate with the optical surface (9) of the secondary reflector (3), wherein said shade (8) is formed as a convexity on the first optical surface (6) of the primary reflector (2) and represents a connecting portion of the optical surfaces (6, 7) of the primary reflector (2).

2. A vehicle headlamp according to claim 1, ***characterized in that*** said shade (8) is arranged in the immediate vicinity of the focus point of the optical surface (9) of the secondary reflector (3).

3. A vehicle headlamp according to any of the preceding claims, ***characterized in that*** each light source (10, 11) is selected as a light-emitting diode (LED), laser, light fibre, filament lamp, or any combination thereof.

4. A vehicle headlamp according to any of the preceding claims, ***characterized in that*** said support member (1) can serve as a heat sink.

## Patentansprüche

1. Fahrzeugscheinwerfer, der zumindest eine Lichtquelle und zumindest einen Reflektor umfasst, der das Licht der zumindest einen Lichtquelle reflektiert, wobei der Scheinwerfer zumindest als ein Reflektor eines Abblendlichts und eines Tagfahrlichts bereitgestellt ist,
wobei ein primärer Reflektor (2) und ein sekundärer Reflektor (3) an zumindest einem Trägerelement (1) angeordnet sind, wobei der primäre Reflektor (2) eine erste optische Oberfläche (6) und eine zweite optische Oberfläche (7) umfasst, die in unmittelbarer Umgebung angeordnet und miteinander verbunden sind und durch eine Blende (8) getrennt sind, wohingegen der sekundäre Reflektor (3) eine optische Oberfläche (9) umfasst, und wobei an dem Trägerelement (1) eine erste und eine zweite Lichtquelle (10, 11) angeordnet sind, wobei die erste Lichtquelle (10) direkt mit der ersten optischen Oberfläche (6) des primären Reflektors (2) kooperiert und wobei die zweite Lichtquelle (11) direkt mit der zweiten optischen Oberfläche (7) des primären Reflektors (2) kooperiert und wobei beide Lichtquellen (10, 11) indirekt mit der optischen Oberfläche (9) des sekundären Reflektors (3) kooperieren, wobei die Blende (8) als eine Konvexität an der ersten optischen Oberfläche (6) des primären Reflektors (2) ausgebildet ist und einen Verbindungsabschnitt der optischen Oberflächen (6, 7) des primären Reflektors (2) repräsentiert.

2. Fahrzeugscheinwerfer gemäß Anspruch 1, **dadurch gekennzeichnet, dass** die Blende (8) in der unmittelbaren Umgebung des Fokuspunkts der optischen Oberfläche (9) des sekundären Reflektors (3) angeordnet ist.

3. Fahrzeugscheinwerfer gemäß einem der vorhergehenden Ansprüche, **dadurch gekennzeichnet, dass** jede Lichtquelle (10, 11) als eine lichtemittierende Diode (LED), ein Laser, eine Lichtfaser, eine Glühlampe oder eine Kombination davon ausgewählt ist.

4. Fahrzeugscheinwerfer gemäß einem der vorhergehenden Ansprüche, **dadurch gekennzeichnet, dass** das Trägerelement (1) als ein Wärmeableiter dienen kann.

## Revendications

1. Phare de véhicule comprenant au moins une source de lumière et au moins un réflecteur réfléchissant la lumière de ladite au moins une source de lumière, ledit phare étant disposé au moins en tant qu'un réflecteur d'un feu de croisement et d'un feu de jour, un réflecteur primaire (2) et un réflecteur secondaire (3) étant disposés sur au moins un élément de support (1), ledit réflecteur primaire (2) comprenant, disposées à un voisinage immédiat et interconnectées, une première surface optique (6) et une seconde surface optique (7), séparées par un organe d'ombrage (8), tandis que le réflecteur secondaire (3) comprend une surface optique (9), et des première et seconde sources de lumière (10, 11) étant disposées sur ledit élément de support (1), ladite première source de lumière (10) coopérant directement avec ladite première surface optique (6) du réflecteur primaire (2) et la seconde source de lumière (11) coopérant directement avec ladite seconde surface optique (7) du réflecteur primaire (2), et les deux sources de lumière (10, 11) coopérant indirectement avec la surface optique (9) du réflecteur secondaire (3), ledit organe d'ombrage (8) se présentant sous la forme d'une convexité sur la première surface optique (6) du réflecteur primaire (2) et représentant une partie de liaison des surfaces optiques (6, 7) du réflecteur primaire (2).

2. Phare de véhicule selon la revendication 1, **caractérisé par le fait que** ledit organe d'ombrage (8) est disposé au voisinage immédiat du point focal de la surface optique (9) du réflecteur secondaire (3).

3. Phare de véhicule selon l'une quelconque des revendications précédentes, **caractérisé par le fait que** chaque source de lumière (10, 11) est sélectionnée pour être une diode électroluminescente (DEL), un laser, une fibre optique, une lampe à incandescence ou toute combinaison de ceux-ci.

4. Phare de véhicule selon l'une quelconque des revendications précédentes, **caractérisé par le fait que** ledit élément de support (1) peut servir de dissipateur thermique.
